# EUROPEAN PATENT SPECIFICATION

(11) **EP 0 878 673 B1**
(45) Date of publication and mention of the grant of the patent: **12.11.2003**
(21) Application number: 98830290.7
(22) Date of filing: 14.05.1998
(51) Int. Cl.: F24F 11/02, F24F 1/02

(54) **Air-climate control**
Klimaregelanordnung
Régulation du conditionnement d'air

(30) Priority: 16.05.1997 IT SI970002 U
(43) Date of publication of application: 18.11.1998
(73) Proprietor: Studio Associato SPG di Pieroni Paolo e De Pari Raffaele, 53040 Abbadia, Montepulciano (Siena) (IT)
(72) Inventor: Pieroni, Paolo, 20025 Legnano (Milano) (IT); De Pari, Raffaele, 53040 Abbadia, Montepulciano (Siena) (IT)
(74) Representative: Bardini, Marco Luigi

(56) References cited:
- WO-A-94/13893
- PATENT ABSTRACTS OF JAPAN vol. 015, no. 077 (M-1085), 22 February 1991 (1991-02-22) & JP 02 298741 A (KIYOSHI YANAGIMACHI;OTHERS: 01), 11 December 1990 (1990-12-11)

## Description

The present invention relates to the field of air-climate control systems and, in particular, to a terminal for centralized air-climate control systems.

Air-climate control systems in which heat and/or cold are centrally produced by means of a system for heat treatment and circulation of thermal carrier fluid are widely used, particularly in offices and industrial environments as well as, more recently, in private homes. Suitable terminals, placed in each separate room and equipped with a cooling and/or heating bundle, hydraulically connected to said central system provide air ventilation through the respective bundles as well as air filtration and humidity control, each terminal having an independent air intake.

Each terminal comprises a ventilator which is operated by a respective electrically supplied motor. In the more simple and less expensive solutions, the turning on and off of the motor, and thus the operation of the ventilator, are controlled as a function of the temperature of the environment by means of a thermostat switch and without any involvement of the circulation of the thermal carrier fluid. In more sophisticated and efficient, but also much more expensive, solutions, a true electronic control central unity which, besides driving the motor, and consequently the ventilator, at different speeds, also regulates the flow of fluid inside the bundle by means of special modulation valves.

The presence of an electric system to supply the terminals makes their structure rather complex, costly and subject to breakdowns, implying decreased overall reliability and safety of the climate control system, and involving, among other things, significant electric consumption by the motor. In this regard, it is important to point out that when the terminals are used in the summer, the total energy necessary to cool the air is greater due to the fact that the terminals have to waste not only the heat of the environment but also that produced by the respective electric motors. Electric motors, finally, are a source of significant electromagnetic pollution.

The object of the present invention is to resolve the above-mentioned problems by providing a terminal for climate control systems that does not need a motor to operate the ventilation means and does not, for this reason, require an independent electric supply system.

This object has been achieved with the terminal for centralized air-climate control systems according to the present invention, which comprises a main hydraulic circuit hydraulically communicating with a network for heat treatment and circulation of a thermal carrier fluid, a thermal exchange bundle installed on the main circuit, ventilation means for conveying the air of the room toward the bundle, and thermostatic control means for driving the operation of the terminal. The terminal is characterized in that it comprises a turbine installed on the main circuit and mechanically connected to the ventilation means in order to command its operation, whereby the flow of the thermal carrier fluid in the main circuit is suited to operate the ventilation means by means of the turbine.

Further characteristics and advantages of the terminal for centralized climate control systems according to the present invention will become apparent in the following description of one of its possible embodiments, given as an example and not limitative, with reference to the attached drawings in which:
- figure 1 is a schematic diagram of the hydraulic layout of the terminal according to the present invention;
- figure 2 is a schematic represantation of the internal structure of the terminal according to the invention.

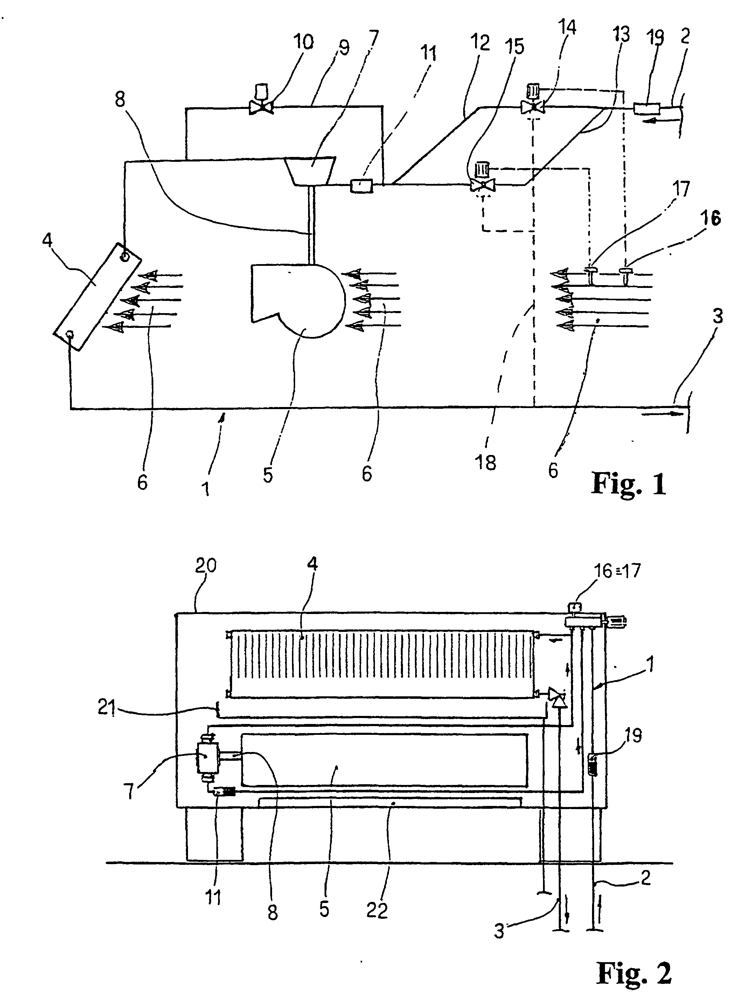

With reference to the above figures, in the terminal according to the present invention, a main hydraulic circuit 1 is provided, housed inside a box-like structure 20 for its support and protection, shown schematically in figure 2. Circuit 1 has an inlet 2, provided with a filter 19, and an outlet 3 which hydraulically communicates with a conventional centralized network not shown for the treatment and circulation of a thermal carrier fluid of a known type.

Main circuit 1 comprises a thermal exchange bundle 4, equipped with a condensate collector 21, through which a ventilator 5 provided with an air filter 22 forces the flow of ambient air, indicated in figure 1 with arrows 6. Air flow 6, according to the temperature at which the fluid is circulated, either yields heat to or absorbs heat from the fluid through convection, in order to respectively cool or heat the room. Both bundle 4 and ventilator 5, which can be of either a centrifugal or tangential type, have a structure and operation substantially known to an expert in the field and, therefore, are represented only schematically in the figures and are not described in detail.

A turbine 7, associated to main circuit 1, is crossed and operated by the thermal carrier fluid upstream from bundle 4. Turbine 7 and the wheel of ventilator 5 are keyed on a common shaft 8, whereby the rotation of the turbine controls the operation of the ventilator. In correspondence with turbine 7, main circuit 1 has a turbine by-pass circuit 9 on which a control valve 10 is mounted. The greater or lesser opening of this valve, modifying the flow of thermal carrier fluid which operates the turbine, controls the revolving speed of the turbine and thus that of the ventilator, as will be made apparent hereinafter. A liter-counter 11 for setting turbine 7 is also placed immediately upstream from the turbine.

According to a possible embodiment of the invention, upstream from turbine 7, main circuit 1 has two parallel branches 12 and 13, passed through by thermal carrier fluid respectively during winter operation and summer operation, on which control valves 14 and 15 are respectively mounted. Valves 14 and 15 are piloted by respective thermostatic probes 16 and 17 immersed in the ambient air, so that when the temperature of the room falls below, in case of summer operation, or rises above, in case of winter operation, a preset value, the valves interrupt the delivery of fluid, stopping the rotation of turbine 7 and, consequently, of ventilator 5.

Valves 14 and 15 can be of the two-way type, according to the circuit scheme indicated with a solid line in figure 1, or of the three-way type. In the latter case, a set by-pass circuit 18 is provided, indicated with a dashed line in figure 1, which is suited to deviate the thermal carrier fluid directly toward outlet 3 of main circuit 1 without passing through turbine 7 and bundle 4. The choice between a two- or three-way type valve must be made in relation to the type of fluid circulation pump provided in the main network. The use of two-way valves, the closing of which stops the flow entering main circuit 1, requires the presence of a differential by-pass on the pump. For the same reason, their use is optimal if associated to electronic pumps having a head that remains constant with the variation of flow rate. Three-way valves increase the hydraulic complexity of the terminal, making it more expensive, but offer better adaptability to the characteristics of the distribution network.

The configuration of main circuit 1 upstream from the turbine can obviously be different from the one shown as an example. It may, in fact, lack the bifurcation that generates branches 12 and 13, both when a single special thermostatic valve of a type suited to both summer and winter operation is used and when the terminal is only for winter or summer use, meaning, in other words, respectively only for heating or only for cooling the air.

The initial setting of the hydraulic circuit of the terminal is carried out by acting on valve 10 of branch 9 which by-passes turbine 7. Control valves 14 and 15 are left completely open and valve 10 is opened to the point at which turbine 7 reaches the r.p.m. corresponding to its maximum efficiency. The rotation speed of the turbine is drawn from the reading of the fluid flow detected by liter-counter 11. In this regard, it is important to point out that the characteristics of turbine 7 are chosen so that its most efficient r.p.m. corresponds to the most efficient r.p.m. of ventilator 5.

Since the total flow rate of thermal carrier fluid conveyed to turbine 7 regulates the heating or cooling action of the terminal by means of the rotation speed of ventilator 5 and, consequently, by means of the power of air flow 6 conveyed by it, a secondary regulation of valve 10 can also be provided by means of a command that is independent from the one used for the initial setting. This secondary regulation will reduce the rotation speed of ventilator 5 when the valve itself is opened to a greater degree. This regulation of the ventilation, similar to that of the rotation speed of the electric motor in terminals of a known type, as well as the regulation of the thermostatic commands on control valves 14 and 15, can be carried out directly by hand or by means of a remote control.

Control valves 14 and 15 can advantageously have a progressive closing, whereby the heating or cooling action can be modulated in proximity to the set point, thus reducing the thermal inertia of the system around said point and improving significantly the efficiency of the terminal. In particular, when the ambient temperature approaches the desired value, the control valve through which the fluid is flowing begins to gradually close, progressively stopping turbine 7 and ventilator 5 and, therefore, causing a gradual decrease in the thermal exchange.

The pressure drop generated by turbine 7 should be considered as an additional pressure head when choosing the size of the circulation pump for the main network. The additional pressure head to be considered is the one caused by the terminal which generates the greatest loss of pressure, since, once this is overcome, all the turbines of the other terminals will be able to operate. Due to the low power involved in this type of plants and the characteristics of the turbines that can be used, the pressure drop is in any case very limited and, therefore, do not significantly affect the total energy consumption of the climate control system.

Although reference has been made in the description to a turbine 7 and control valves 14 and 15 placed upstream from bundle 4, it is obvious to an expert in the field that, according to the invention, they can also be installed downstream from the bundle.

The terminal according to the invention, therefore, makes it possible to avoid the use of a motor and relevant electric means for operating the ventilator, and this provides important advantages in terms of energy savings, absence of electromagnetic pollution and reduction of noise pollution, with quieter operation of the turbine as well as greater structural simplicity and lower cost.

The efficiency of thermal exchange of the terminal, especially when equipped with control valves having a progressive closing, is comparable to those of more sophisticated electric terminals, but with a much more simple, compact and inexpensive structure. The refrigerating efficiency of the terminal is particularly increased since the terminal does not have to waste also the heat generated by the motor during its operation.

The terminal, furthermore, is particularly reliable and safe, and this makes it suitable for use in wet environments as well as in the presence of dangers of fire or explosion. It will be appreciated, finally, that the terminal according to the present invention is formed by components that are inexpensive and easy to obtain on the market. The turbine can be manufactured in series and in more than one dimension according to the standard sizes of climate control terminals.

Variations and/or modifications can be brought to the terminal for centralized air-climate control systems according to the present invention without departing from the scope of the invention itself as set forth in the appended claims.

## Claims

1. A terminal for a room centralized air-climate control system, comprising a main hydraulic circuit (1), hydraulically communicating with a network for heat treatment and circulation of a thermal carrier fluid, a thermal exchange bundle (4) installed on said main circuit (1), ventilation means (5) for conveying the air of said room toward said bundle (4), and thermostatic control means (14, 15) for driving the operation of said terminal, **characterized in that** it comprises a turbine (7) installed on said main circuit (1) and mechanically connected to said ventilation means (5) to control its operation, whereby the flow of said thermal carrier fluid in said main circuit (1) is suited to operate said ventilation means (5) by means of said turbine (7).

2. A terminal according to claim 1, wherein said thermostatic control means (14, 15) comprise at least one control valve mounted on said main circuit.

3. A terminal according to claim 2, **characterized in that** it comprises two control valves (14, 15), respectively for the operation of said terminal to cool or heat said environment, which respectively intercept parallel branches (12, 13) of said main circuit (1).

4. A terminal according to any of claims 2 or 3, wherein at least one of said control valves is of the three-way type and is placed upstream from said turbine, a by-pass circuit (18) for communicating with said main circuit (1) upstream from said turbine (7) and downstream from said thermal exchange bundle (4) being provided.

5. A terminal according to claims 2, 3 and 4, wherein said control valves (14, 15) are a progressive closure type.

6. A terminal according to any of the previous claims, wherein said main circuit (1) comprises a by-pass circuit (9) of said turbine (7), on which a control valve (10) is mounted whose greater or lesser degree of opening regulates the flow of said thermal carrier fluid through said turbine (7).

7. A terminal according to claim 6, wherein remote control means are provided for the opening of said regulation valve (10) of said by-pass circuit (9) of said turbine as well as for the regulation of said thermostatic command means (14, 15).

8. A terminal according to any of the previous claims, wherein means (11) for measuring the flow of said thermal carrier fluid through said turbine (7) are provided.

## Patentansprüche

1. Anschluß für ein zentrales Raumluftklimatisierungssteuersystem, enthaltend einen Haupthydraulikkreis (1), der hydraulisch mit einem Netzwerk zur Wärmebehandlung und Zirkulation eines Wärmeträgerfluids kommuniziert, ein Wärmetauschpaket (4), das an dem Hauptkreis (1) installiert ist, Ventilationseinrichtungen (5) zum Fördern der Luft des Raums zu dem Paket (4) und Thermostatsteuereinrichtungen (14, 15) zum Betreiben des Betriebs des Anschlusses, **dadurch gekennzeichnet, daß** er eine Turbine (7) enthält, die an dem Hauptkreis (1) installiert und mechanisch mit den Ventilationseinrichtungen (5) verbunden ist, um ihren Betrieb zu steuern, wodurch die Strömung des Wäremeträgerfluids in dem Hauptkreis (1) geeignet ist, die Ventilationseinrichtungen (5) mittels der Turbine (7) zu betreiben.

2. Anschluß nach Anspruch 1, wobei die Thermostatsteuereinrichtungen (14, 15) wenigstens ein Steuerventil enthalten, das an dem Hauptkreis montiert ist.

3. Anschluß nach Anspruch 2, **dadurch gekennzeichnet, daß** er zwei Steuerventile (14, 15) entsprechend für den Betrieb des Anschlusses zum Kühlen oder Heizen der Umgebung enthält, die entsprechend parallele Zweige (12, 13) des Hauptkreises (1) schneiden.

4. Anschluß nach einem der Ansprüche 2 oder 3, wobei wenigstens eines der Steuerventile vom Dreiwegetyp und stromaufwärts der Turbine angeordnet ist, wobei ein Umgehungskreis (18) zum Kommunizieren mit dem Hauptkreis (1) stromaufwärts der Turbine (7) und stromabwärts des Wärmetauschpakets (4) vorgesehen ist.

5. Anschluß nach den Ansprüchen (2, 3 und 4), wobei die Steuerventile (14, 15) vom progressiven Schließtyp sind.

6. Anschluß nach einem der vorhergehenden Ansprüche, wobei der Hauptkreis (1) einen Umgehungskreis (9) der Turbine (7) enthält, an welchem ein Steuerventil (10) montiert ist, dessen größerer oder geringerer Öffnungsgrad die Strömung des Wärmeträgerfluids durch die Turbine (7) reguliert.

7. Anschluß nach Anspruch 6, wobei Fernsteuereinrichtungen vorgesehen sind für das Öffnen des Regulierungsventils (10) des Umgehungskreises (9) der Turbine sowie für die Regulation der Thermostatkommandoeinrichtungen (14, 15).

8. Anschluß nach einem der vorhergehenden Ansprüche, wobei Einrichtungen (11) zum Messen der Strömung des Wärmeträgerfluids durch die Turbine (7) vorgesehen sind.

## Revendications

1. Un terminal pour un système de commande centralisé d'air conditionné d'une pièce, comprenant un circuit hydraulique principat (1) relié de façon hydraulique à un réseau de mise en circulation et de traitement d'un fluide porteur thermique, un ensemble d'échangeurs thermiques (4) disposé en séria sur ledit circuit principal (1), des moyens de ventilation (5) pour entraîner en circulation l'air de ladite pièce vers ledit ensemble (4), et des moyens de contrôle thermostatiques (14, 15) pour commander le fonctionnement dudit terminal, caractàrisé en ce qu'il comprend une turbine (7) située sur ledit circuit principat (1) et reliée mécaniquement aux dits moyens de ventilation (5) pour contrôler leur fonctionnement, en quoi le flux dudit fluide porteur thermique dans ledit circuit principal (1) est apte à commander lesdits moyens de ventilation (5) au moyen de ladite turbine (7).

2. Un terminal selon la revendication 1, dans lequel lesdits moyens de contrôle thermostatiques (14, 15) comprennent au moins une vanne de contrôle montée sur ledit circuit principal.

3. Un terminal selon la revendication 2, **caractérisé en ce qu'**il comprend deux vannes de contrôle (14, 15) respectivement pour le fonctionnement dudit terminal pour refroidir ou réchauffer ledit environnement, qui sont montées respectivement en série sur des branches parallèles (12, 13) dudit circuit principal (1).

4. Un terminal selon l'une des revendications 2 et 3, dans lequel au moins l'une des vannes de contrôle est du type trois voies et est montée en amont de ladite turbine, un circuit bipasse (18) étant en outre prévu pour faire communiquer la partie du dit circuit principal (1) située en amont de ladite turbine (7) avec sa partie située en aval du dit ensemble d'échangeurs thermiques (4)

5. Un terminal selon l'une des revendications 2, 3 et 4, dans lequel lesdites vannes de contrôle (14, 15) sont du type à fermeture progressive.

6. Un terminal selon l'une quelconque des revendications précédentes, dans lequel ledit circuit principat (1) comprend un circuit bipasse (9) de ladite turbine (7), sur lequel est montée une vanne de contrôle (10) dont le degré d'ouverture plus ou moins grand régule le flux du dit fluide porteur thermique à travers ladite turbine (7).

7. Un terminal selon la revendication 6, dans lequel des moyens de télé contrôle sont prévus pour l'ouverture de ladite vanne de régulation (10) du dit circuit bipasse (9) de ladite turbine aussi bien que pour la régulation desdits moyens de commande thermostatiques (14, 15).

8. Un terminal selon l'une quelconque des revendications précédentes, dans lequel sont prévus des moyens (11) pour mesurer le flux du dit fluide porteur thermique à travers ladite turbine (7).
